# EUROPEAN PATENT APPLICATION

(11) **EP 0 655 571 A1**
(43) Date of publication of application: **31.05.1995**
(21) Application number: 94600009.8
(22) Date of filing: 23.11.1994
(51) Int. Cl.: F16K 3/26

(54) **Cylindrical axially sliding valve**

(30) Priority: 24.11.1993 YU 733/93
(71) Applicant: BAKO ENGINEERING LTD, Nicosia (CY)
(72) Inventor: Milosevic, Slobodan, 11000 Belgrade (YU)
(74) Representative: Panotopoulos, Panagiotis

(57) **Abstract**

This invention relates to a valve with axially sliding control device for fluid flow and a chamber, by which a maximum flow is made possible with simple structure and maintenance, without hydraulic strokes, noise and cavitation in the system or on the valve. The valve consists of a hollow cylindrical housing (9) with chamber (11) therein, axially sliding along the cylindrical body (1). At the middle of body (1), which has been carried out in axial direction with inlet/outlet openings, radially, and under angle relative to axial axis, two overflow openings (5,5') have been made. The axes of overflow openings (5,5') are placed in the same level. The inlet opening on body (1) with overflow openings (5) and outlet opening with overflow openings (5') have been mutually separated. On body (1), in bearings (3), in front of overflow openings (5) and between overflow openings (5) and (5'), sealing rings (7) are placed, over which the surface (10) of housing (9) slides.

## Description

This invention relates to the field of mechanical engineering, i.e. machine assemblies in general, and precisely, to the field of valves, namely, fluid flow control devices with axial sliding movement of the shutter, and pertains to a valve with axial sliding control device for fluid flow having a chamber therein.

According to International Classification, the invention is classified as: F16K3/00.

The technical problem desired to be solved is how to design the structure of a fluid valve which, by using a cylindrical axially movable housing with a chamber in it would make possible a simple and efficient opening/closing of fluid flow, whereby a valve of exceptionally directed fluid motion without cavitation, without hydraulic strokes in the system, i.e. noiseless, simple for maintenance with minimum parts and long lasting, would be obtained.

The known flow valves which are most often utilized and working on a closing principle through coil spindle, whereby valve closing resists fluid pressure and is carried out by resting of rubber gasket on the valve seat, demonstrated many shortcomings. By such a way of valve closing uncontrolled tightening occurs, i.e. insufficient tightening of rubber gasket on valve seat, what in the first case leads to damage of gasket, i.e. to errosion of valve seat, due to increased velocity of fluid flow through such reduced cross section of the fluid flow that occurred.

In those known solutions, an excessive friction also occurs between the coil spindle and nut through which the coil spindle is led, what most often leads to sliding of coil spindle. The results of such increased friction are, inter alia, the increase of clearance between movable elements, what creates vibrations of these movable elements in fluid flow, which additionally, due to the effect of fluid pressure, cause hydraulic strokes being transferred to the entire piping, whereby they make flow valves extremely noisy gadgets. These phenomena are especially known in big apartment houses, what, inter alia, leads to disturbance of peace in such buildings.

The known flow valves working on closing principle in the direction of fluid motion have common shortcomings being reflected in the following: noisyness of such flow valves to a great extent, great piston vibrations, due to unsealingness and often as a result of clearance that appeared, uncontrolled motion occurs, i.e. undirected fluid motion, what causes cavitation with all negative results.

A valve with axial sliding control device for fluid flow, according to this invention, consists of a cylindrical hollow valve body being partially surrounded by a cylindrical valve housing with a chamber therein, which slides along the valve body. At central part of cylindrical valve body, two mutually adjacent overflow outlets, the axes of which are placed under angle relative to axial body axis, have been carried out radially. These outlets have been carried out in continuation of inlet/outlet openings in the body. By axial and sliding movement of valve housing these outlets in the housing with a chamber therein are released, whereby fluid flow is made possible. The advantages of such a solution are in that a maximum fluid flow (water, oil, gas, petroleum, acid, base or similarly) is enabled with minimum elements and simple structure, and without hydraulic strokes, cavitation and noise in the system.

The invention has been explained in detail by means of the attached drawings on which:
- fig.1 shows the valve, according to the invention, in vertical section and in closed position, in the so-called blocked flow,
- fig.2 shows the valve body of fig.1,
- fig.3 shows the valve body in the section on line A-A, of fig.2,
- fig.4 shows the valve of fig.1 in half-open position, the so-called muffled flow,
- fig.5 shows the valve of fig.1 in open position, the so-called free flow.

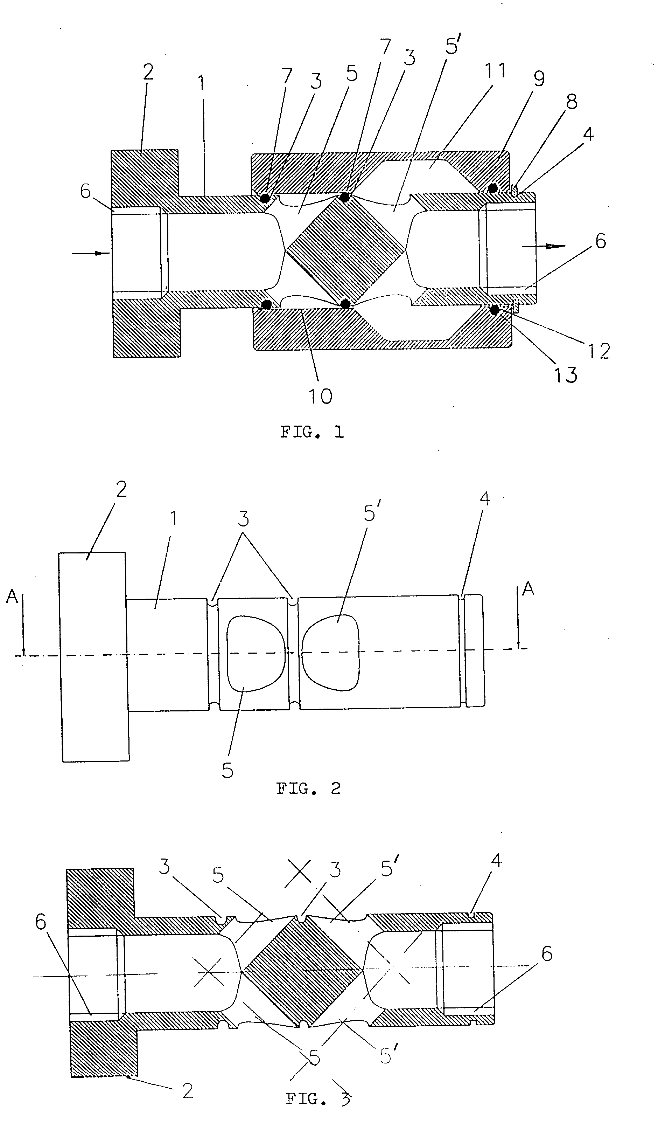

The valve, according to the invention, figs. 1 and 2, consists of a body 1 of cylindrical hollow form which, at the inlet side, in head 2 of body 1, as well as at the outlet, has coils 6 carried out for building in the system. At the middle of body 1, in continuation of inlet/outlet openings and radially within the body 1, and with axes being at the same level and under an angle relative to axial axis of body 1, two overflow openings 5,5' have been carried out. These openings 5 and 5' have been mutually separated. The axes of these overflow openings and square sides, formed by the sides of overflow openings, what can be seen in the section on fig.1, are parallel. On body 1, with overflow openings 5, and in the bearing 3, a sealing ring 7 is placed, as well as on the top of the previously mentioned square, formed between openings 5,5'. The working part, i.e. the internal surface 10 of cylindrical housing 9, and before expansion-chamber 11, slides over sealing rings 7. This chamber is carried out as a cylindrical opening within the housing 9. Behind the chamber 11, on working part, sealing ring 13 is placed in the bearing 12, sliding over the back part of the valve body 1. At the external surface of outlet portion of body 1, in the groove 4, a metallic ring-like safety device 8 is placed, for the reason of safety, i.e. limitation of motion of housing 9 at working speed.

The valve, according to the invention, fig. 1, is in closed position, because sealing rings 7 in front of and behind the overflow openings 5 rest on the surface 10, whereby the fluid flow is prevented. The valve functioning is going in such a way, figs. 4 and 5, that housing 9 slides axially from closed position along the surface 10, along body 1 wherein the surface 10 "descends" from the central ring 7, and releases the openings 5, whereby fluid flow through openings 5 begins in the expanded portion 11, and from it through openings 5' furtheron through outlet portion of body 1 into the system. Maximum flow is achieved when lateral sides of openings 5,5' are levelled with lateral sides of expanded portion 11, regardless of possible rotation of body 1.

One should observe that the valve, according to this invention, can be made equally successfully if both sealing rings 7 are placed in the corresponding bearings made in sliding housing 9 instead of in bearings 3 on body 1 (it hasn't been disclosed). In that case, body 1 would not have bearings 3 on itself.

## Claims

1. A valve having axially sliding control device for fluid flow and a chamber, characterized by hollow cylindrical housing (9), made with an expansion-chamber (11) therein, which axially slides along the cylindrical body (1), with inlet/outlet openings carried out axially, in which, at the middle, two overflow openings (5,5') have been made radially and under an angle, and by the inlet opening on body (1) with overflow openings (5) and outlet opening with overflow openings (5') having been mutually separated.

2. A valve, according to claim 1, characterized by head (2) being made at the inlet of body (1).

3. A valve, according to claim 1, characterized by axes of overflow openings (5,5') being under angle relative to axial axis of body (1) placed in the same level.

4. A valve, according to claim 1, characterized by sealing rings (7) being placed on the body (1) in bearings (3), in front of overflow openings (5) and between overflow openings (5) and (5'), over which the surface (10) of housing (9) slides.

5. A valve, according to claim 1, characterized by metallic safety ring (8) being placed at the outlet opening at the external part of the body (1) and out of housing (9), in the groove (4).

6. A valve, according to claim 1, characterized by sealing ring (13) being placed in housing (9), in groove (12) sliding along the surface of back part of body (1).

7. A valve, according to claims 1 and 6, characterized by expansion-chamber (11) with oblique sides, being made from the internal side of housing (9) in radial direction, whereby at maximal flow, the oblique sides of chamber (11) and openings (5,5') have been aligned.

8. A valve, according to claims 1-7, characterized by sealing rings (7) being placed in the sliding housing (9), and body (1) made without bearing (3).
